# DEMANDE DE BREVET EUROPEEN

(11) **EP 1 397 016 A1**
(43) Date de publication de la demande: **10.03.2004**
(21) Numéro de dépôt: 02292205.8
(22) Date de dépôt: 09.09.2002
(51) Int. Cl.: H04Q 7/38

(54) **Procédé de commutation automatique d'un terminal bimode**

(71) Demandeur: Nec Technologies (UK) Limited, Reading, Berkshire RG2 0TD (GB)
(72) Inventeur: Sanchez, Javier, 92500 Rueil-Malmaison (FR); Roberts, Michael, 92200 Neuilly sur Seine (FR)
(74) Mandataire: Simonnet, Christine

(57) **Abrégé**

L'invention concerne un procédé de commutation d'un premier réseau dans lequel ledit terminal est apte à fonctionner uniquement en mode circuit ou uniquement en mode paquet vers un deuxième réseau de télécommunication dans lequel ledit terminal est apte à fonctionner simultanément en mode circuit et en mode paquet.

Le procédé selon l'invention consiste à commuter automatiquement vers le deuxième réseau si au cours d'une première communication via le premier réseau le terminal requiert une deuxième communication via ce premier réseau.

## Description

### Domaine technique

L'invention se situe dans le domaine des télécommunications et concerne plus spécifiquement un procédé de commutation d'un terminal de télécommunication d'un premier réseau dans lequel ledit terminal est apte à fonctionner uniquement en mode circuit ou uniquement en mode paquet vers un deuxième réseau de télécommunication dans lequel ledit terminal est apte à fonctionner simultanément en mode circuit et en mode paquet.

L'invention concerne également un terminal mobile de télécommunication apte à fonctionner dans un premier réseau uniquement en mode circuit ou uniquement en mode paquet et dans un deuxième réseau simultanément en mode circuit et en mode paquet.

### Etat de la technique antérieure

Les réseaux GSM et UMTS sont composés de deux parties : le réseau coeur et le réseau d'accès.

Dans la terminologie UMTS, le réseau coeur est désigné par le terme CN (pour Core Network en anglais) et le réseau d'accès est désigné par le terme UTRAN (pour Universal terrestrial Radio Access Network).

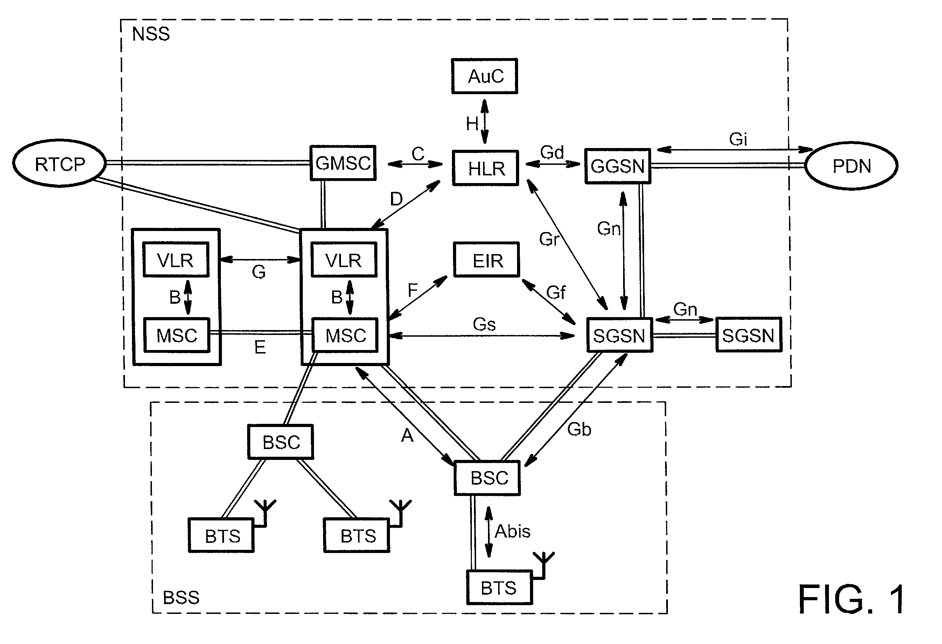

La figure 1 représente une vue détaillée d'un réseau GSM incluant la partie du réseau relative aux services à commutation de circuits (téléphonie, applications de données sur circuit) et la partie du réseau relative aux services à commutation de paquet utilisée, par exemple, pour les applications accessibles par le réseau Internet. Le service à commutation de paquet est introduit dans la norme GSM sous le nom de GPRS (pour General Packet Radio Service). La partie purement GPRS du réseau coeur d'un réseau GSM est composée du SGSN (pour Serving GPRS Support Node) et du GGSN (pour Gateway GPRS Support Node). Ces éléments sont complètement distincts de ceux utilisés pour la partie circuit. Les seules fonctions communes à la gestion des communications circuit et paquets sont les fonction de HLR (pour Home Location Register), EIR (pour Equipment Identity Register) et AuC (pour Authentification Center).

La séparation du support des applications circuit et paquet dans le réseau coeur du réseau GSM permet aux opérateurs de télécommunications de disposer d'une certaine souplesse lors de la migration vers le GPRS. Cette séparation pose cependant quelques problèmes liés à la multiplication des équipements qui impose à l'opérateur une gestion plus complexe de son réseau.

Dans le réseau UMTS, les fonctions relatives à ces deux parties sont groupées au sein d'un réseau coeur comportant deux domaines distincts :
- le domaine CS (pour Circuit Switched),
- et le domaine PS (pour Packet Switched).

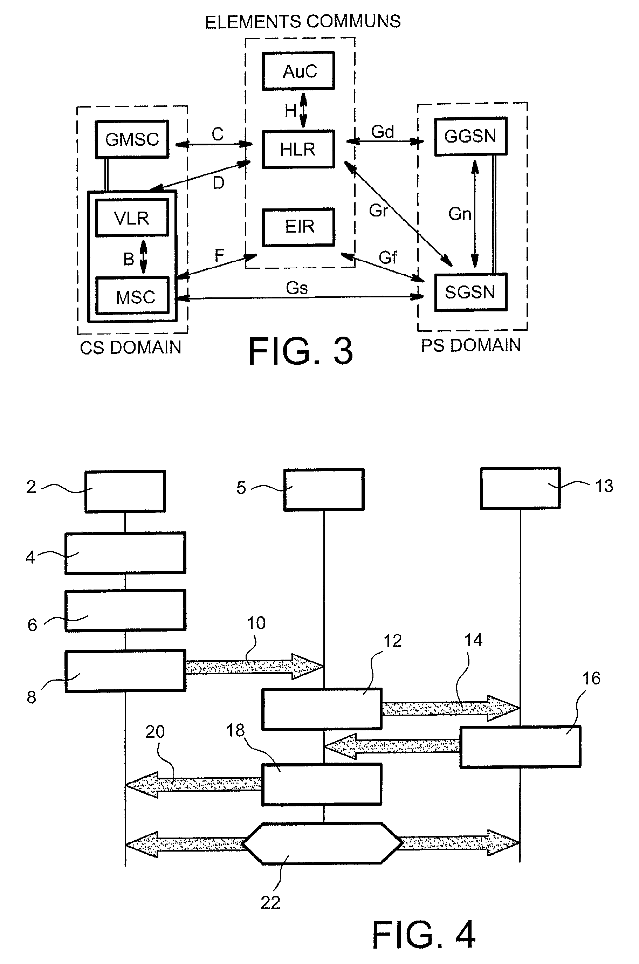

Les éléments du réseau coeur sont donc divisés en trois groupes illustrés par la figure 3. Le premier groupe correspond au domaine CS et comprend le MSC (pour Mobile Service Switching Center) et le VLR (pour Visitor Location Register). Le deuxième groupe correspond au domaine PS et comprend le SGSN (pour Serving GPRS Support Node) et le GGSN (pour Gateway GPRS Support Node). Le dernier groupe comprend les éléments du réseau communs au domaine PS et au domaine CS : le HLR, l'EIR et l'AuC. Dans les réseaux GSM et UMTS, les domaines CS et PS sont reliés par l'intermédiaire d'une interface optionnelle (Gs).

Contrairement au réseau GSM, les spécifications des réseaux UMTS permettent à une station mobile d'établir et de maintenir plusieurs connexions simultanément dans un même appel. Chaque connexion peut mettre en place un service support (bearer service, en anglais) avec une qualité de service QoS différente pour convoyer les flots de données à deux ou plusieurs médias (voix, vidéo, images, fichiers...).

Dans le réseau GSM/GPRS, les terminaux de communication GPRS sont classés en fonction de leur capacité à gérer des communications en mode circuit et des communications en mode paquet.

Trois classes de terminaux ont été définies :
- les terminaux de « classe A » qui intègrent la fonctionnalité DTM (pour Dual Terminal Mode) et se caractérisent par la capacité de gérer simultanément des communications en mode circuit (la transmission de la voix par exemple) et des communications en mode paquet (la navigation sur Internet par exemple).
- les terminaux de « Classe B » qui permettent l'offre de services en mode paquet et circuit mais pas en même temps, et
- les terminaux de « Classe C » qui ne supportent que les services en mode paquet.

Notons que les terminaux de classe B n'intègrent pas la fonctionnalité DTM alors que cette fonctionnalité est implicite dans un terminal UMTS. Par conséquent, il n'est pas possible de gérer simultanément une communication en mode circuit et une communication en mode paquet avec un terminal classe B. Ceci constitue la principale motivation de l'invention qui s'applique aux terminaux bimodes GSM/GPRS et UMTS et dont le but est de pallier le manque de fonctionnalité DTM dans un terminal GPRS class B.

### Exposé de l'invention

L'invention préconise un procédé qui permet de réaliser une commutation d'un terminal de télécommunication d'un premier réseau dans lequel ledit terminal est apte à fonctionner uniquement en mode circuit ou uniquement en mode paquet vers un deuxième réseau dans lequel ledit terminal est apte à fonctionner simultanément en mode circuit et en mode paquet.

Le procédé selon l'invention consiste à commuter automatiquement vers le deuxième réseau si au cours d'une première communication via le premier réseau le terminal requiert une deuxième communication via ce premier réseau.

Cette commutation est obtenue selon les étapes suivantes :
- au cours de la première communication, si une connexion au premier réseau est demandée, le terminal envoie au premier réseau une requête de commutation inter système,
- à réception de cette requête, le premier réseau envoie au deuxième réseau une demande de prise en main de la communication courante,
- à réception de cette demande, le deuxième réseau alloue au terminal les ressources nécessaires pour gérer simultanément une communication en mode circuit et une communication en mode paquet et,
- le premier réseau envoie au terminal une autorisation de commutation vers le deuxième réseau.

Dans un exemple de réalisation de l'invention, le terminal est un téléphone mobile ou un ordinateur portable muni d'un modem radio et le premier réseau est un réseau GSM/GPRS et le deuxième réseau est un réseau UMTS.

L'invention concerne également un terminal mobile de télécommunication apte à fonctionner dans un premier réseau uniquement en mode circuit ou uniquement en mode paquet et dans un deuxième réseau de télécommunication simultanément en mode circuit et en mode paquet.

Le terminal selon l'invention comporte des moyens pour commuter automatiquement vers le deuxième réseau si au cours d'une première communication via le premier réseau le terminal requiert une deuxième communication via ce premier réseau.

### Brève description des dessins

D'autres caractéristiques et avantages de l'invention ressortiront de la description qui va suivre, prise à titre d'exemple non limitatif en référence aux figures annexées dans lesquelles :
- la figure 1 représente schématiquement l'architecture d'un réseau GSM,
- la figure 2 représente schématiquement l'architecture d'un réseau UMTS,
- la figure 3 représente schématiquement la répartition en domaine des éléments du réseau coeur d'un réseau UMTS,
- la figure 4 est un diagramme illustrant schématiquement le procédé selon l'invention.

### Exposé détaillé de modes de réalisation particuliers

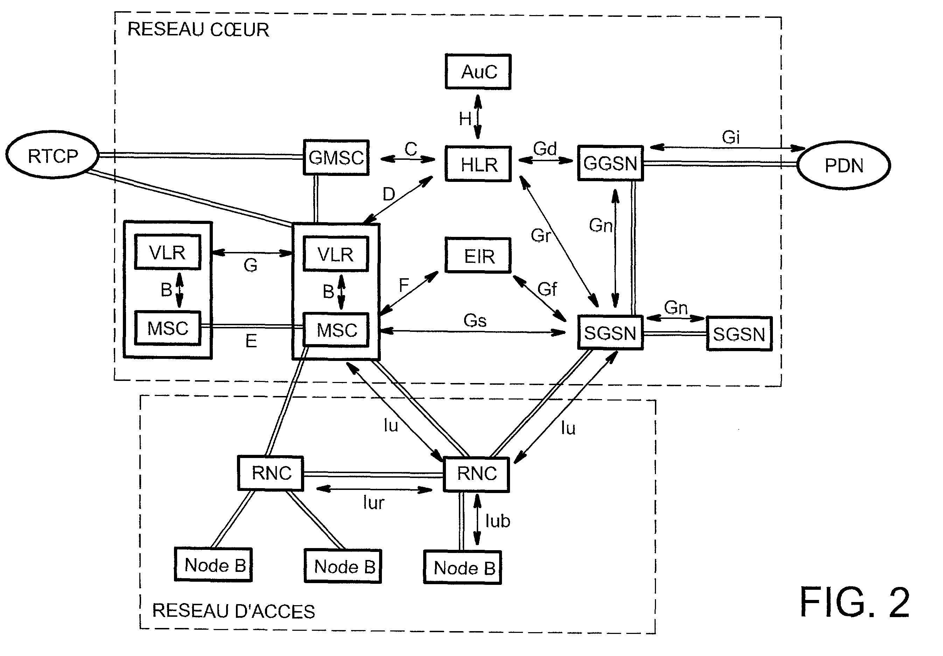

La description qui suit fait référence aux réseaux GSM/GPRS et UMTS dont les architectures respectives sont représentées sur les figures 1 à 3 décrites précédemment et à la figure 4 illustrant les étapes d'un mode préféré de réalisation du procédé selon l'invention appliqué à un téléphone mobile. Cependant, le procédé peut être mis en oeuvre dans tout équipement usager désigné par le sigle UE, (pour User Equipment en anglais) et désignant une station mobile dans un réseau UMTS.

Rappelons que l'équipement usager se compose du point de vue fonctionnel, de deux parties :
- l'équipement mobile (ME, pour Mobile Equipment) et
- le module d'identité « universel » de l'abonné (USIM, pour Universal Subscriber Identity Module).

Dans la suite de la description, le terme terminal désignera tout équipement usager répondant à cette définition.

En référence à la figure 4, pour illustrer le procédé de l'invention, on suppose que l'utilisateur possède un terminal 2 intégrant les technologies GSM/GPRS et UMTS et que la partie GPRS du terminal est de « Class B ».

Le terminal 2 comporte un programme informatique apte à détecter le besoin pour un utilisateur de la fonctionnalité DTM. A l'étape 4, l'utilisateur est engagé dans une communication téléphonique via le réseau GSM/GPRS 5 et en même temps il souhaite naviguer sur le réseau Internet à partir du même terminal 2. A cet effet, le terminal comporte un logiciel qui détecte (étape 6) le besoin pour l'utilisateur de la fonctionnalité DTM et, génère de manière autonome (étape 8) une requête de basculement intersystème, et envoie cette requête (flèche 10) au réseau GSM/GPRS courant.

A réception de cette requête, le réseau GSM/GPRS génère (étape 12) une requête pour demander au réseau UMTS 13 de prendre en main la communication courante et envoie (flèche 14) cette requête au réseau UMTS.

A réception de cette requête (étape 16) le réseau UMTS alloue les ressources nécessaires au terminal 2 lui permettant d'échanger des données simultanément en mode circuit et en mode paquet.

A l'étape 18, le réseau GSM/GPRS communique au terminal mobile 2 l'autorisation de basculer vers le réseau UMTS (flèche 20).

A l'étape 22, la communication se poursuit via le réseau UMTS.

Notons qu'au niveau de l'utilisateur le basculement automatique s'effectue de façon complètement transparente et la qualité du service en cours ne subit pas de dégradations significatives.

## Revendications

1. Procédé de commutation d'un terminal de télécommunication d'un premier réseau dans lequel ledit terminal est apte à fonctionner uniquement en mode circuit ou uniquement en mode paquet vers un deuxième réseau de télécommunication dans lequel ledit terminal est apte à fonctionner simultanément en mode circuit et en mode paquet, procédé **caractérisé en ce qu'**il consiste à commuter automatiquement vers le deuxième réseau si au cours d'une première communication via le premier réseau le terminal requiert une deuxième communication via ce premier réseau.

2. Procédé selon la revendication 1, **caractérisé en ce que**,
- au cours de la première communication, si une nouvelle connexion au premier réseau est demandée, le terminal envoie au premier réseau une requête de commutation inter système,
- à réception de cette requête, le premier réseau envoie au deuxième réseau une demande de prise en main de la communication courante,
- à réception de cette demande, le deuxième réseau alloue au terminal les ressources nécessaires pour gérer simultanément une communication en mode circuit et une communication en mode paquet, ensuite,
- le premier réseau envoie au terminal une autorisation de commutation vers le deuxième réseau.

3. Procédé selon la revendication 2, **caractérisé en ce que** le premier réseau est un réseau GSM/GPRS, et le deuxième réseau est un réseau UMTS.

4. Procédé selon l'une des revendications 1 à 3, **caractérisé en ce que** le terminal est un téléphone mobile.

5. Procédé selon l'une des revendications 1 à 3, **caractérisé en ce que** le terminal est un ordinateur portable muni d'un modem radio.

6. Terminal mobile de télécommunication apte à fonctionner dans un premier réseau uniquement en mode circuit ou uniquement en mode paquet et dans un deuxième réseau de simultanément en mode circuit et en mode paquet, **caractérisé en ce qu'**il comporte
- des moyens pour commuter automatiquement vers le deuxième réseau si au cours d'une première communication via le premier réseau le terminal requiert une deuxième communication via ce premier réseau.
